# EUROPEAN PATENT APPLICATION

(11) **EP 1 394 998 A2**
(43) Date of publication of application: **03.03.2004**
(21) Application number: 03300096.9
(22) Date of filing: 26.08.2003
(51) Int. Cl.: H04L 12/46

(54) **Improved virtual local area network provisioning in bridged networks**

(30) Priority: 27.08.2002 US 227872
(71) Applicant: Alcatel Canada Inc., Kanata, Ontario K2K 2E6 (CA)
(72) Inventor: Virdy, Macmohana Singh, Ottawa, Ontario K1S 5M2 (CA); Gaspard, Moise, Nepean, Ontario K2H 9G8 (CA); Proulx, Denis Armand, Kanata, Ontario K2W 1B6 (CA); Jabbour, Georges, Ottawa, Ontario K2H 9A9 (CA); Ansari, Imad Alam, Kanata, Ontario K2M 2H3 (CA)
(74) Representative: Feray, Valérie

(57) **Abstract**

A method and human-machine interface for Virtual Local Area Network (VLAN) provisioning in bridged networking environments are provided. The method includes steps of provisioning VLAN support for each customer VLAN on every data transport trunk and by extension of every data trunk port in the associated data transport network. The human-machine interface enables an operator to expediently effect VLAN provisioning abstracting the intricacies of the data transport network over which VLAN services are provisioned. Advantages are derived from VLAN provisioning independent of an underlying in-use active spanning-tree topology. In particular customer VLANs are provisioned over spanning-tree stand-by designated data transport trunk links and therefore pre-provisioned in the case of spanning-tree reconfiguration. Operator VLAN provisioning tasks are lessened via provisions for the selection of all data transport trunk links/ ports in the data transport network.

## Description

The invention relates to network management and service provisioning, and in particular to reducing overheads in provisioning virtual local area networks services over an infrastructure of bridged networks.

A Local Area Network (LAN) includes a group of data network nodes and various data transport equipment that share, a common communications medium and other data transport resources. Usually, LANs provide data transport services for homes, small businesses and departments within large enterprises.

Most LANs are confined to a single building or group of adjacent buildings. However legacy LANs technology is inadequate in supporting: an ever increasing telecommuting work force, remote office connectivity, decentralized government services, etc. because of a limited reach.

Customer-owned disparate LANs can be interconnected over large distances via dedicated links such as wire and wireless links. Another alternative to disparate LAN interconnectivity can be achieved by connecting each LAN segment to a carrier data transport network. The separate LAN segments are said to be bridged. The Internet is one of the largest public carrier networks. A group of interconnected LANs is referred to as a Wide Area Network (WAN). Nevertheless, customers incur a large overhead in provisioning, managing and maintaining disparate LANs.

Data carrier networks can be said to provide connection-less and connection-oriented data transport services. The Internet is the largest connection-less data transport network typically employing the Internet Protocol to convey packets. Selected portions of the Internet, provisioned by certain service providers, offer connection-oriented data transport typically employing exemplary technologies such as Asynchronous Transfer Mode (ATM) and Multi-Protocol Label Switching (MPLS). Various other data transport technologies exist of which connection-less technologies have enjoyed a long term utilization and represent a large portion of the installed infrastructure. Connection-less technologies are prevalent in LAN environments and will therefore represent the focus of the present description without limiting the application of the described concepts thereto.

Connection-less data transport technologies regard data transport media as broadcast media via which the participating data network nodes exchange data packets. While broadcasting data is conducive to efficient data interchange within a LAN, in bridging geographically displaced LANs via carrier data networks, the broadcast-type data transport leads to data transport inefficiencies in the service provider's data transport network and perhaps to potential disclosure of closely-held information. The connection-less broadcast-type data transport in carrier networks does however benefit from redundant data transport, the broadcast-type data transport in effect routing data transport around failed data transport equipment by design.

Recent developments in the data communications field have brought about a Virtual LAN (VLAN) paradigm enabling the LAN to be extended into homes, remote office sites, geographically displaced government offices, etc. over existing installed infrastructure. VLAN technology enables logical grouping of data network nodes and related data transport infrastructure to extend LANs beyond the restrictions imposed by the underlying infrastructure. Data network nodes associated with the same VLAN behave as if participating in the same LAN, benefiting from the broadcast-type information exchange therebetween. As portions of the VLAN are typically provisioned over carrier networks, VLAN associated routing of data packets within carrier networks can be engineered to follow definite paths while still benefiting from redundant connectivity. The logical associativity defining the VLAN provides data traffic differentiation which enables encryption based protection of closely-held information. VLAN technologies enable routing of data packets based on the VLAN associativity thereof.

The logical grouping of data network nodes reduces the provisioning, the management, and the reconfiguration of data transport infrastructure for the customer by providing logical network design solutions with minimal changes to physical installed infrastructure. Data network nodes in each LAN segment of the VLAN are unaware as to whether they are connected to a single LAN segment or multiple bridged LAN segments.

A multitude of independent carriers cooperate in provisioning carrier WANs of the likes of the Internet. Although, in theory, data transport network infrastructure may be installed such that only one data transport path may exist between any two data network nodes; the amount of network configuration information that must be considered for such a data network design would be overwhelming and, as it was mentioned above, undesirable as a level of data transport redundancy is desirable for sustained data transport.

For a connection-less data transport network to function optimally, only one active data transport path should exist between any two data transport nodes. Multiple active paths between data network nodes cause loops in the associated network. If a loop exists in the network topology, the potential exists for duplication of data packets. When loops occur, a packet switching node deems at least one destination data network node to be reachable via multiple data ports associated with the data switching node. Under such conditions, forwarding algorithms employed at data switching nodes are designed to replicate data packets for transmission over the multiple data ports. It is desirable to limit such conditions to purposely configured instances thereof.

Developments in data packet routing include the adoption of a spanning-tree protocol and associated spanning-tree determination algorithms. The spanning-tree protocol is a link layer management protocol that prevents the establishment of undesirable data transport loops in data transport paths while providing support for data transport redundancy.

To provide path redundancy, the spanning-tree protocol defines a tree of in-use interconnecting data transport links that spans all data switching nodes in the associated data transport network. The spanning-tree protocol configures certain redundant data transport links into a standby state. If a data transport network segment previously under the influence of the spanning-tree protocol becomes unreachable, or if spanning-tree protocol configuration parameters change, the spanning-tree algorithm reconfigures the spanning-tree topology and re-establishes data transport to the unreachable data transport network segment by activating for use selected standby data transport links.

When the spanning-tree protocol is used in the carrier data transport network, the operation of the spanning-tree protocol is transparent to customer data network nodes and perhaps even to customer LANs. Dependent on a particular implementation of and the services supported over a carrier data transport network, multiple in-use spanning-trees may be defined and coexist. For example, a spanning-tree of in-use data transport links may be defined for high data throughput utilizing high bandwidth links, while another spanning-tree of in-use data transport links may be defined for low data transport latency utilizing the fewest number of data transport links.

Connectivity determining spanning-tree algorithms may be run centrally via Network Management Systems (NMS) by analysts. To do so the analyst and the associated NMS must posses a large amount of information regarding data transport infrastructure in a realm of management of the NMS. Central spanning-tree determination benefits from an availability of the resulting spanning-tree for the analysts perusal in providing support for manual VLAN provisioning. Such solutions however tend to be reactive as data transport equipment failure instances require the analyst's attention at least in re-provisioning VLANs to re-establish VLAN connectivity over reconfigured spanning-trees.

In order to reduce network management and service provisioning overheads, the spanning-tree protocol may be implemented in a decentralized fashion with each data network node and data switching nodes running spanning-tree determination algorithms. A collective exchange of information therebetween provides the necessary information to determine and establish spanning-tree connectivity. While such a solution reduces the need for analyst intervention in re-establishing data transport connectivity subsequent to data transport infrastructure failures, the active in-use spanning-tree exists typically only as operational parameter configurations within individual data transport equipment and is unavailable to the analyst and the NMS for re-provisioning VLAN connectivity.

While co-pending commonly assigned Unites States Patent Application entitled "Virtual Local Area Network Auto-Discovery Methods" filed on even date, bearing attorney reference number 13597-US; describes methods of deriving VLAN configuration information from participating data network nodes, the described methods do not delve into VLAN provisioning. A considerable operational overhead is still incurred in manual VLAN provisioning.

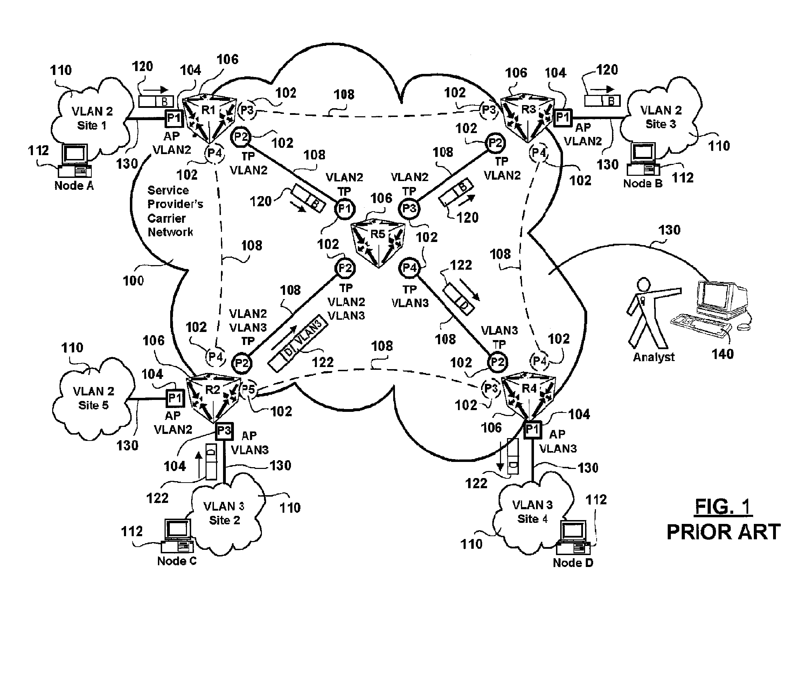

Referring to FIG. 1, prior art VLAN provisioning is performed manually by configuring individual data transport and switching equipment to provision trunk ports (TP) 102 and access ports (AP) 104 of manually selected data switching nodes 106 in a service provider (carrier) network 100. Such a prior art manual VLAN provisioning solution is provided by CISCO Systems' VLAN Director software version 2.1.

The access ports 104 are connected via access links 130 to the customer LANs 110 and the trunk ports 102 are connected to the data transport trunks 108 between the data switching nodes 106.

The use of the spanning-tree protocol avoids the creation of loops in the data transport network 100 by putting certain data transport trunks 108 in a stand-by state thereby preventing the replication of data packets 120/ 122 thereto as would otherwise result. Stand-by data transport trunks 108 are shown by dashing in the FIG. 1. In-use data transport trunks 108 are shown solid. A similar depiction is used with respect to the corresponding ports 102. Prior art VLAN provisioning methods typically call only for the trunk ports 102 and routers 106 associated with in-use data transport trunks 108 to be included in VLAN provisioning.

In accordance with the example shown in FIG. 1, the configuration of VLAN2 includes three customer LAN segments 110 at respective sites 1, 3, and 5; the LAN segments 110 are connected to respective routers 106-R1,106-R3, and 106-R2 of a service provider's data transport network 100. Packets 120 of VLAN2 are routed over the shared service provider's carrier network 100 in accordance with the spanning-tree protocol, which has designated: router 106-R5 as a spanning-tree root node, data transport trunks 108-dashed on stand-by to prevent the formation of logical loops in the data transport network 100, and data transport trunks 108-solid in-use. For example, VLAN2 is provisioned only on ports 102-P1 and 102-P2 on each of routers 106-R1, 106-R2, and 106-R3 and on ports 102-P1, 102-P2, and 102-P3 on router 106-R5.

Data packets 120/ 122 are routed through the carrier data transport network 100 over the loop-free spanning-tree of data transport trunks 108-solid using Open Systems Interconnect (OSI) Layer-2, typically Media Access Control ADDResses (MAC ADDRs) conveyed in data packet 120 headers when the trunk ports 102 are provisioned (associated) with only one VLAN. In the case where a trunk port 102 is provisioned to support more than one VLAN, a VLAN identifier is added in the packet headers (122) in accordance with the IEEE 802.1Q protocol incorporated herein by reference. The VLAN identifier is used to route data packets 122 through the network 100 and the VLAN identifier is removed from packet headers when no longer needed. Ports 102-P2 of routers 106-R2 and 106-R5 are provisioned for both VLAN2 and VLAN3.

VLAN data packets 122 thereby necessitate the use of the VLAN identifier to differentiate data traffic.

As routing examples, a packet 120 is shown to be routed from data network node 112-A to data network node 112-B using only the MAC address of node 112-B; another packet 122 is shown to be routed from node 112-C to node 112-D using the VLAN identifier for VLAN3 between routers 106-R2 and 106-R5, and using the MAC address for node 112-D over the rest of the data transport path.

In the event of a service-affecting fault, the spanning-tree protocol will recalculate the spanning-tree and re-assign data transport trunks 108 in-use.

The problem with the prior art solutions resented above lies in determining which data transport trunks 108 are chosen for use by the spanning-tree protocol. Such determination can be difficult and time-consuming, thereby making provisioning of VLANs likewise difficult and time-consuming. This is especially the case for large and complex data transport networks 100. The redefinition of the spanning-tree requires corresponding manual re-provisioning of the VLANs. Such manual provisioning is error prone.

Another development in the field which addresses VLAN provisioning methods is exemplified by CISCO's VLAN Trunk Protocol (VTP). The VLAN trunk protocol is a CISCO Systems proprietary solution to propagating manually configured VLAN information between adjacent VTP aware network elements. The propagation of VTP information is implemented as differentiated data traffic over VLAN 1 which means that VLAN support must be apriori activated for each VTP aware network element. To date only selected CISCO Catalyst products support the VTP protocol. The suitability for using the VTP protocol is dependent on: the definition of VTP domains of which other vendor equipment would be unaware, the establishment of VTP server/ client relationships between VTP aware (CISCO only) network elements, memory for storage of VTP related information at each participating VTP aware network element, the ability to parse VTP specific frames, the ability to respond to a particular reserved broadcast address in exchanging VTP related information, etc. Although some benefit may be derived from the use of the VTP protocol over a CISCO only network equipment infrastructure, numerous shortcomings of the present definition of the VTP protocol call for the reduction of the extent of provisioned VLANs, which runs counter to the need to extent VLANs beyond the restrictions imposed by the physical network infrastructure. Various workarounds call for quick manual re-provisioning of VLAN support as the only reactive solution.

Therefore, one object of the present invention is to provide a method of provisioning a Virtual Local Area Network (VLAN) in order to reduce operational overheads in provisioning VLAN support in data transport networks and lessen the reliance of provisioning on trained personnel.

More precisely, the present invention provides a method of provisioning a Virtual Local Area Network (VLAN) comprising the steps of:
a) obtaining at least one VLAN IDentifier;
b) selecting a plurality of VLAN trunks; and
c) associating the VLAN ID with each one of the plurality of VLAN trunks, the selection and association of the VLAN ID with each one of the plurality of VLAN trunks being undertaken irrespective of a one of an in-use and a stand-by designation of each one of the plurality of VLAN trunks.

Thus, the invention provides enhanced VLAN provisioning, which saves an operator's time, thereby reducing a service provider's operating costs. The invention benefits from being implemented on a Network Management System (NMS) because VLAN provisioning method does not require selection of routers and trunk ports but rather involves provisioning VLAN support on all trunk links in an associated data transport network.

The solution provided increases the reliability, availability and serviceability of provisioned VLANs of pre-provisioning thereof on all trunk links including spanning-tree protocol stand-by designated trunk links. The stand-by data transport trunk links are ready for use should the spanning-tree be redefined, thereby reducing the time required to bring the VLAN into service on the newly defined spanning-trees.

Because the management is done through the human-machine interface on an NMS, the presented VLAN provisioning methods are much more efficient than error prone legacy manual command entry approaches performed via a console on a per router / per trunk port basis. The NMS has the advantages of being able to display/ configure/ modify the provisioned VLANs and show any inconsistencies or misconfigurations thereof.

In accordance with another aspect of the invention, a method of provisioning a VLAN trunk is provided. The method includes steps of: obtaining a plurality of VLAN IDs associated with a corresponding plurality of provisioned VLANs, and associating the plurality of VLAN IDs with the VLAN trunk. The association of the plurality of VLAN IDs with the VLAN trunk is to be undertaken irrespective of a one of an in-use and a stand-by designation of the VLAN trunk.

In accordance with a further aspect of the invention, a method of provisioning a VLAN trunk port is provided. The method includes steps of: obtaining a plurality of VLAN IDs associated with a corresponding plurality of provisioned VLANs; and associating the plurality of VLAN IDs with the VLAN trunk port. The association of the plurality of VLAN IDs with the VLAN trunk port is to be undertaken irrespective of a one of an in-use and a stand-by designation of the VLAN trunk port.

In accordance with a further aspect of the invention, a VLAN provisioning human-machine interface is provided. A VLAN ID selector is used for selecting a plurality of VLAN IDs. A VLAN trunk selector is used for selecting a plurality of VLAN trunks. And, an activator is used for committing associations between the plurality of VLAN IDs and the plurality of VLAN trunks. The associations between the plurality of VLAN IDs and the plurality of VLAN trunks are to be made irrespective of one of an in-use and a stand-by designation of each one of the plurality of VLAN trunks.

In accordance with yet another aspect of the invention, a network management system for effecting VLAN provisioning in a managed communications network is provided.

The features and advantages of the invention will become more apparent from the following detailed description of the preferred embodiments with reference to the attached diagrams wherein:
FIG. 1 is a schematic diagram showing configured interconnected data transport elements providing VLAN support in accordance with prior art VLAN provisioning solutions;
FIG. 2 is a schematic diagram showing, in accordance with an exemplary embodiment of the invention, configured interconnected data transport elements providing VLAN support;
FIG. 3 is a schematic diagram showing, in accordance with the exemplary embodiment of the invention, a result of a data transport equipment failure of configured interconnected data transport elements providing VLAN support;
FIG. 4 is a schematic flow diagram showing VLAN provisioning process steps used, in accordance with the exemplary embodiment of the invention; and
FIG. 5 is a schematic diagram showing, in accordance with the exemplary embodiment of the invention, generic elements of a human-machine interface used in VLAN provisioning.

It will be noted that in the attached diagrams like features bear similar labels.

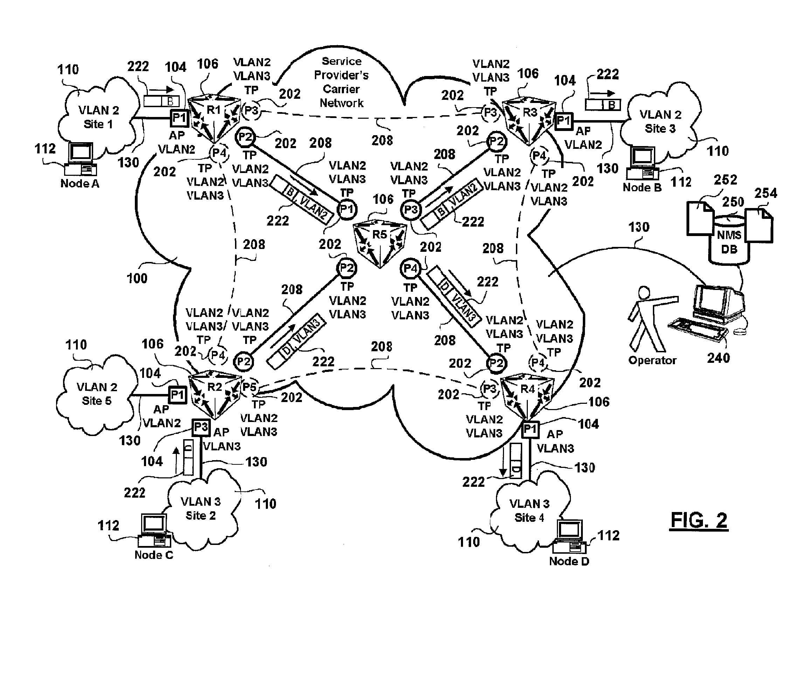

FIG.2 is a schematic diagram showing configured interconnected data transport elements providing VLAN support.

In accordance with an exemplary embodiment of the invention, each VLAN is provisioned on all trunk links 208 in the service provider's data transport network 100 - including stand-by designated data transport trunk links 208-dashed, providing for VLAN pre-provisioning at improved operational efficiencies. This technique eliminates the need to determine specific in-use data transport trunk links 108 and specific in-use trunk ports 102 on specific routers 106 participating in the active in-use spanning-tree topology.

The service provider's data transport network 100 typically carries data traffic associated with more than one VLAN. IEEE 802.1Q VLAN identifiers must be included in VLAN associated packet headers (222) to provide traffic differentiation. The packets 222 are routed through the carrier's data transport network 100 using the VLAN identifier in accordance with the IEEE 802.1Q protocol specification.

As the spanning-tree protocol prevents the formation of logical data transport loops, VLAN provisioning over stand-by designated data transport trunk links 208-dashed is not a concern. In fact, pre-provisioning data transport trunk links 208-dashed for all provisioned VLANs has the advantage of making the data transport trunk links 208-dashed ready to carry VLAN traffic should the spanning-tree reconfigure.

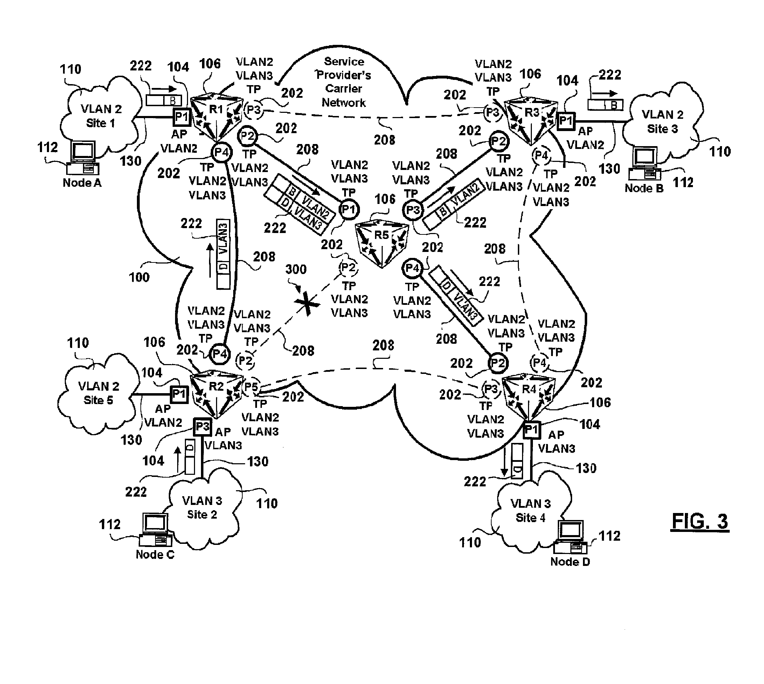

FIG. 3 shows the response of the data transport network 100 to a service-affecting failure 300 experienced by the data transport trunk link 208 between routers 106-R2 and 106-R5. In accordance with the spanning-tree protocol, as a response to the fault 300, spanning-tree algorithms executing (collectively) on routers 106 recalculate the spanning-tree.

In accordance with the exemplary result shown, the spanning-tree recalculation results in previously unused data transport trunk link 208 between routers 106-R2 and 106-R1 participating in the active topology, and data transport trunk link 208 experiencing the failure 300 being taken out of the tree. Since in accordance with the exemplary embodiment of the invention, the newly activated for use data transport trunk link 208 has already been provisioned for VLAN2 and VLAN3, it is immediately available for use by the provisioned VLANs. For example, a packet 222 destined for node 112-D is subsequently routed from the router 106-R2 to the router 106-R4 via the routers 106-R1 and 106-R5.

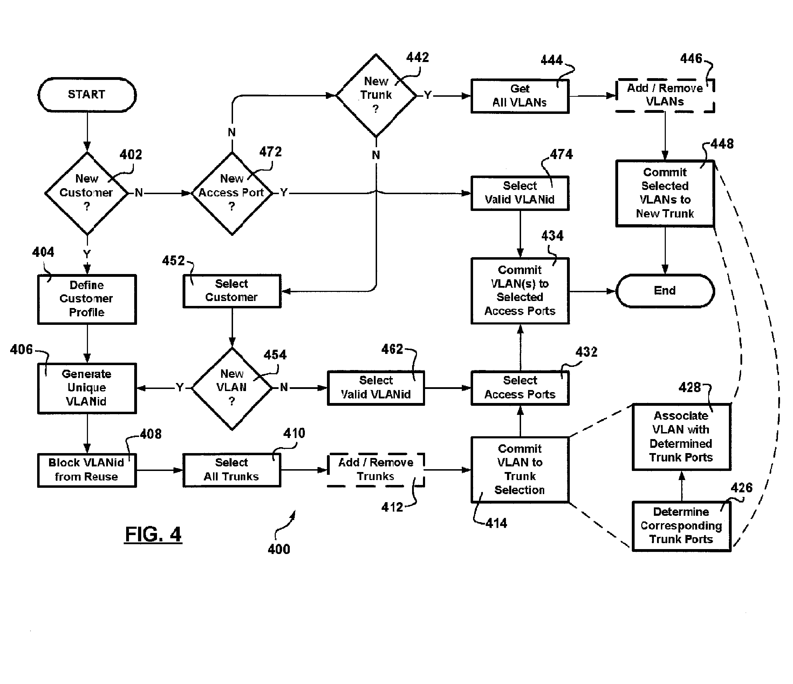

FIG. 4 is a flow diagram showing VLAN provisioning process steps used, in accordance with the exemplary embodiment of the invention.

The VLAN provisioning process 400 enables an operator to create new VLAN customers, create unique VLAN identifiers, add new trunk links 208, etc. in the carrier's data transport network 100, and interlink selective customer sites to participate in a particular provisioned VLAN. The above VLAN provisioning functions may be performed independently. The presented VLAN provisioning process 400 further incorporates an exemplary logical progression of steps without limiting the invention thereto.

Depending on a particular VLAN provisioning task faced by an operator, a determination 402 is made as to whether VLAN provisioning is to be effected for a new customer. If a new customer is to be supported, the process 400 may include a step of defining a new customer profile 404. At least one unique VLAN identifier is generated 406 for the new customer.

In generating the unique VLAN identifier the process 400 either chooses a next unused VLAN identifier, or a previously surrendered and unused VLAN identifier. The selected unique VLAN identifier is subsequently blocked from reuse 408, typically by being stored in a roster of in-use VLAN identifiers. In accordance with the IEEE 802.1Q protocol specification, 12bits are used in packet headers to specify VLAN identifiers. The IEEE 802.1Q protocol specification also reserves selected VLAN identifiers for protocol related functions. The reserved VLAN identifiers may also be included in the roster of in-use VLAN identifiers to simplify VLAN provisioning. The reserved VLAN identifiers cannot be surrendered for subsequent reuse.

In accordance with the exemplary embodiment of the invention, in step 410 of the VLAN provisioning process 400, all defined data transport trunk links 208 in the carrier's data transport network 100 are selected and associated 414 with the VLAN identifier. The definition of data transport trunk links 208 represents a carrier network provisioning task described elsewhere. Note that the selection of all data transport trunk links 208 in the data transport network 100 is done regardless of the in-use/ stand-by designation thereof resulting from the execution of spanning-tree algorithm(s).

The definition of data transport trunk links 208 includes the specification of origination and termination trunk ports 202. A network management database (NMS DB) 250 holds data transport trunk link definitions. The association 414 of the VLAN identifier with all trunk links is typically implemented via VLAN identifier associations with the corresponding trunk ports 202. All of the corresponding trunk ports 202 are determined 426, and the VLAN identifier is associated 428 therewith. VLAN provisioning database records held by each router 106 in the carrier's data transport network 100 show (see FIG. 2) the VLAN identifiers associated with each trunk port 202.

To complete VLAN provisioning, the VLAN identifier needs to be associated with access ports 104 corresponding to each customer site (110). Access ports 104 are selected 432 corresponding to each customer site for which the selected VLAN is to be provisioned. The VLAN identifier is associated 434 with the selected access ports 104.

While operating a data transport network 100, typically new data transport trunk links 208 may be added. In accordance with the exemplary embodiment of the invention, if a new data transport trunk link is added 442 to the service provider's data transport network 100, all provisioned VLANs should be associated with the new data transport trunk link 208. Therefore, the VLAN provisioning process 400 selects all provisioned VLANs in step 444 and (subject to add/ removals 446) associates 448 all (selected) provisioned VLANs to the new data transport trunk link 208. In implementing step 448, the provisioning process 400 performs steps 426 and 428 as described herein above.

Provisioned VLAN support for a selected 452 existing customer, may be modified by: provisioning additional VLANs for existing customers and/ or modifying the group of LAN segments associated with provisioned VLANs.

In the case of provisioning additional VLANs 454 for a selected 452 customer the VLAN provisioning process 400 is resumed from step 406.

In modifying the group of LAN segments associated with provisioned customer VLANs, a valid VLAN identifier is selected 462 and the VLAN provisioning process 400 resumes from step 432.

While operating a data transport network 100, typically new customer LAN segments 110 may be added. From the perspective of the service provider's network 100, the addition (472) of a new customer LAN segment 110 corresponds to bringing a corresponding access port 104 into service. To provision VLAN services to the newly added customer LAN segment 110, at least one VLAN identifier is selected 474 and the VLAN provisioning process 400 resumes from step 434.

It is understood that the methods of VLAN provisioning described herein are not limited to VLAN provisioning on trunk links 208 and have been presented as such to simplify the presentation of the relevant concepts. In fact each router 106 is unaware of trunk links 208 and only aware of corresponding trunk ports 202. Moreover in provisioning a VLAN on a trunk link 208, corresponding trunk ports 202 on separate routers 106 at each end of the trunk link 208 must be configured. Dependent on the actual data transport technology used to physically convey data over trunk links 208 more than two trunk ports 202 may have to be configured for each trunk link 208. For example each trunk link 208: consists of two separate unidirectional data transport links (four ports 202), use of inverse multiplexing data transport techniques (double the number of physical links), etc. Restated another way, in accordance with the invention, each VLAN is provisioned on all data transport ports 202 in the data transport network 100. This is what actually takes place as described with reference to VLAN provisioning steps 426 and 428. In the interest of reducing operational overheads this level of detail is purposely abstracted in providing the exemplary VLAN provisioning solution. The NMS database 250 maintains associations between data transport equipment in the data transport network 100 defining corresponding trunk links 208.

The VLAN provisioning process 400 is a service provider performed service which ensures the uniqueness of the VLAN identifiers used in the carrier's data transport network 100. The VLAN provisioning process reduces VLAN provisioning overheads.

Inevitably edge managed data network elements in the managed data transport network 100 are used to provide connectivity with adjacent data transport networks managed by peer service providers. Therefore VLAN trunks 208 bridging two managed domains exist. For such VLAN trunks, the VLAN provisioning methods apply at least to the proximal managed corresponding VLAN trunk ports.

Varying VLAN service offerings blur the requirement for inclusion of VLAN access port 104 configuration into VLAN provisioning. VLAN service offering exist in which customer premise equipment providing VLAN support are provided by the VLAN service provider. Therefore the VLAN service provider may at least managed the backbone side of the customer premise equipment providing the VLAN support. In accordance with such a service offering, a VLAN trunk 208 exists between the service provider's carrier network 100 and the particular customer site 110 with both VLAN trunk ports associated therewith falling in the service provider's management domain. VLAN access port configuration on the private side of the provided customer premise equipment falls under the customer's realm of management.

When implemented on a Network Management System (NMS) 240, see FIG. 2, the VLAN provisioning process 400 may be operable via a graphical user interface having widgets such as selection boxes, buttons, specifier fields, etc.

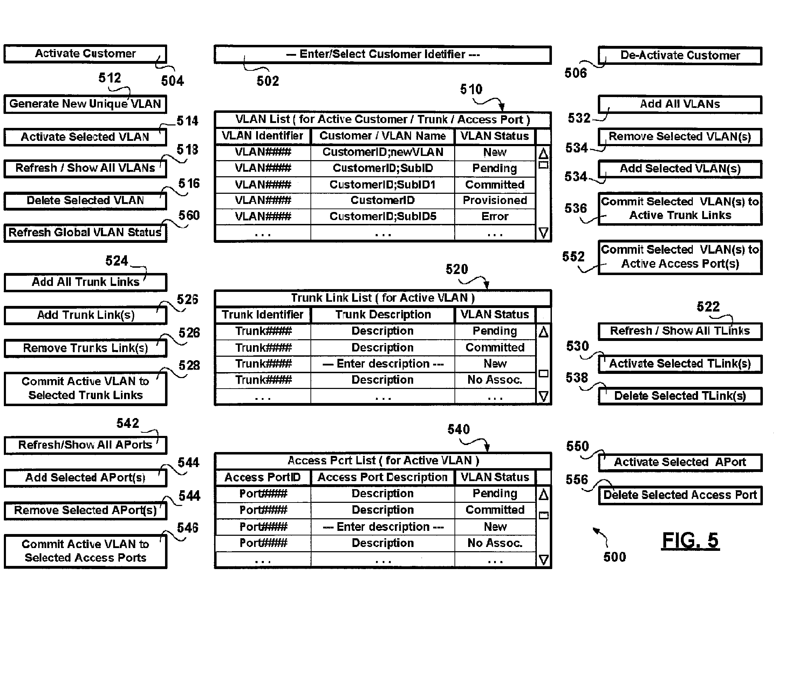

FIG.5 is a schematic diagram showing, in accordance with the exemplary embodiment of the invention, generic interactive elements of a human-machine interface used in VLAN provisioning. It is understood that combinations of the presented elements may be used to generate a multitude of graphical user interface panels for a more intuitive and/ or more standardized human-machine interface. It is further understood that the exemplary human-machine interface 500 presented herein may be further simplified by overloading the function of the various interactive elements to perform context aware actions.

The definition (step 404) of the customer profile may be implemented via compound selection box 502 for specifying unique customer identifiers such as customer names.

Subsequent to filing the customer specification field 502, an "Activate Customer" button 504 may be pressed to create a context in which subsequent VLAN provisioning actions may be performed. The uniqueness of the customer name may be ensured by comparing the specified customer identifier provided with a list tracking active customer identifiers. The list of active customer identifiers may be available for browsing and display via the compound selection box 502.

If the specified customer identifier already exists, then the specified customer profile is selected and made the active profile for subsequent actions (implementing the customer selection functionality of VLAN provisioning step 452), otherwise a new customer profile is created and activated for subsequent actions (implementing the functionality of VLAN provisioning step 404).

A "De-activate Customer (Profile)" button 506 may also be provided. Deactivating a customer profile may only free VLAN identifiers associated with the customer. The customer profile may be retained for other purposes.

Activating a customer profile by pressing the button 504 further updates a VLAN selection list 510 with provisioned VLANs for the active customer profile. If the customer profile has just been defined (404), then the list 510 of VLANs provisioned for the customer is initially empty. A "Generate New Unique VLAN" identifier button 512 is provided for implementing functionality of steps 454 and 406 of the VLAN provisioning process.

In generating 406 a new unique VLAN identifier subsequent to the creation of a new customer profile, the VLAN list 510 will have one entry specifying: a new unique VLAN identifier, the corresponding (active) customer identifier, and a VLAN provisioning status -"New" in this case.

An "Activate Selected VLAN" button 514 and a "Delete Selected VLAN" button 516 may also be provided. In pressing the Delete Selected VLAN button 516, all corresponding VLAN identifier associations to data transport trunk links 208 and access ports 104 are removed. The corresponding VLAN status will display "Pending" while the associations are removed. Subsequent to the removal of VLAN associations, the corresponding VLAN identifier is released and made available for subsequent re-use.

Typically network management and service provisioning can and is performed in parallel via a multitude of NMS 240. Therefore, so can VLAN provisioning be performed in parallel. In accordance with such an implementation, the VLAN identifier roster 252 and customer list 254 are shared between all participating NMS 240. A "Refresh/ Show All VLANs" button 518 is provided to refresh the VLAN list 510, perhaps also refreshing the VLAN provisioning status for all VLANs. Pressing the Refresh/ Show All VLANs button 518 may have a context sensitive response. If a customer is active, then the VLAN list 510 will refresh VLANs associations with the active customer. If no customer is active, then the VLAN list 510 will show all VLANs irrespective of customer association. The usefulness of the later capability will further become more apparent from the description herein below making reference to provisioning new data transport trunk links 208 and to provisioning of new access ports 104.

Activating a selected VLAN, the NMS 240 presents the operator with a list 520 of all of the data transport trunk links 208 on which the VLAN is provisioned. In the case of a newly created VLAN, the list of trunk links 520 would be empty.

As mentioned above, data transport trunk links 208 are provisioned via processes described elsewhere and may happen in parallel with VLAN provisioning. A "Refresh/ Show all Trunk Links" button 522 is provided to display all provisioned data transport trunk links 208 in the data transport network 100. Since data transport trunk links 208 may be associated with more than one VLAN, the VLAN provisioning status displayed in the trunk link list 520 may only have meaning in the context of a then currently active VLAN. An exemption is a newly provisioned data transport trunk link 208 which does not yet have VLAN associations and whose VLAN provisioning status is "New".

In accordance with the exemplary embodiment of the invention, a single click of an "Add All Trunk Links" button 524 is sufficient to initiate VLAN provisioning on all data transport trunk links 208 in the service provider's data transport network 100 in performing step 410 of the VLAN provisioning process. The functionality of VLAN provisioning step 410, enables novice operators with little VLAN technology experience to efficiently and effortlessly perform VLAN provisioning.

As an advanced feature associated with the data transport trunk link selection step 410 an analyst may also be provided with the opportunity to tailor the data transport trunk selection by adding and removing 412 selected data transport trunk links 208 via corresponding "Add/ Remove Selected Trunk Link(s)" buttons 526. Specifying data transport trunk links 208 to be excluded from a VLAN provisioning still saves time for the analyst compared to the prior art methods of specify the trunk ports 102 to be included in the VLAN, as there typically are fewer data transport trunk links 208 to excluded than to include. The fewer number of data transport trunk links 208 to be excluded stems from the preferred provisioning of VLANs over all data transport trunk links 208.

VLAN provisioning on data transport trunk links 208 is completed by pressing a "Commit Active VLAN to Selected Trunk Links" button 528 which implements functionality of VLAN provisioning step 414. The corresponding VLAN provisioning status of the selected data transport trunk links 208 will initially show "Pending" as steps 426 and 428 of the VLAN provisioning process 400 are performed. Subsequent to performing steps 426/ 428 the VLAN provisioning status changes to "Committed". The sequence of interaction provides for easy and efficient VLAN provisioning in the service provider network 100.

As mentioned above, besides attending to VLAN provisioning tasks, network management and service provisioning also includes data transport trunk link 208 provisioning. In accordance with the exemplary embodiment of the invention, every data transport trunk link 208 is to be configured to support data transport for all provisioned VLANs. Therefore all provisioned VLANs should also be provisioned over new data transport trunk links 208.

As data transport trunk link provisioning is done in parallel, by pressing the Refresh/ Show All Trunk Links button 522, all provisioned data transport trunk links 208 in the data transport network 100 are displayed irrespective of VLAN associativity. All newly provisioned data transport trunk links 208 are also shown in the trunk link list 520. The operator may select the newly provisioned data transport trunk links 208 and operate an "Activate Selected Trunk Link(s)" button 530 to create an interaction context in which subsequent actions may be performed on the selected trunk links.

A clash of adjectives is noted. It is pointed out that the activation of selected trunk links performed via pressing the button 530 refers to creating an interaction context in which subsequent human-machine interactions may be performed thereon; and not, to make the selected trunk links 208 part of the active in-use data transport topology. Only the spanning-tree protocol affects the inclusion of trunk links 208 in the active in-use data transport topology.

With the selected newly provisioned data transport trunk links 208 activated for interaction therewith, the VLAN list 510 shows the VLANs associated therewith - in this case none will be displayed as the active trunk link 208 is newly provisioned. By operating the Refresh/ Show All VLANs button 518 (not in the active customer interaction context) all VLANs, irrespective of customer association, are shown in the VLAN list 510.

In accordance with the exemplary embodiment of the invention, a single click of an "Add All VLANs" button 532 is sufficient to initiate VLAN provisioning of all provisioned VLANs in the service provider's data transport network 100 on the selected (active) newly provisioned data transport trunk links 208, implementing functionality of VLAN provisioning step 444. The functionality of VLAN provisioning step 444, enables novice operators with little VLAN technology experience to efficiently perform VLAN provisioning.

As an advanced feature associated with the VLAN selection step 444 an analyst may also be provided with the opportunity to tailor the VLAN selection by adding and removing 446 selected VLANs via corresponding "Add/ Remove Selected VLAN(s)" buttons 534. Specifying VLANs to be excluded from VLAN provisioning still saves time for the analyst as there typically are fewer VLANs to excluded than to include. The fewer number of VLANs to be excluded stems from the preferred VLAN provisioning over all data transport trunk links 208.

VLAN provisioning on the newly provisioned data transport trunk links 208 is completed by pressing a "Commit Selected VLAN(s) to Active Trunk Link(s)" button 536 which implements functionality of VLAN provisioning step 448. The corresponding VLAN provisioning status of the selected data transport trunk links 208 will initially show "Pending" as steps 426 and 428 of the VLAN provisioning process 400 are performed. Subsequent to performing steps 426/ 428 the VLAN provisioning status changes to "Committed" . The sequence of interaction provides for easy and efficient VLAN provisioning in the service provider network 100.

In accordance with another implementation of the invention, the provisioning of all VLANs over newly provisioned data transport trunk links 208 is an automatic network management and service provisioning function performed without necessitating operator/ analyst interaction.

As new data transport trunk links 208 may be provisioned, data transport trunk links 208 may also be decommissioned. A "Delete Selected Trunk Link(s)" button 538 may be provided. In decommissioning a selected data transport trunk link 208, all VLAN associations with the selected data transport trunk link 208 are removed only. The corresponding VLAN provisioning status may show that the selected data transport trunk links 208 are being decommissioned by specifying that no VLAN associations exist therewith. As data transport trunk links 208 may be decommissioned via other network management and service provisioning processes, it is understood that the sequence of operation just described may be performed automatically without necessitating operator/ analyst attention.

It is understood that provisioning new, and decommissioning data transport trunk links 208 triggers the spanning-tree algorithms to re-calculate the spanning-tree(s).

Having activated a customer 504/ 452, and a particular customer VLAN 514/ 462 for interaction therewith, an access port list 540 shows access ports 104 associated with the active customer VLAN. For a newly created VLAN, the access port list 540 would be empty.

By operating a "Refresh/ Show All Access Ports" button 542 all access ports 104 in the data transport network 100 are displayed in the access port list 540. The status of each access port may only have a meaning with respect to the active customer VLAN. Other implementations of the access port VLAN status may be used without limiting the invention to the description presented herein.

Using "Add/ Remove Selected Access Port(s)" buttons 544 is sufficient to initiate VLAN provisioning of the active customer VLAN on the selected access ports 104. VLAN provisioning on the selected access ports 104 is completed by pressing a "Commit Active VLAN(s) to Selected Access Port(s)" button 546 which implements functionality of VLAN provisioning step 434. The corresponding VLAN provisioning status of the selected access ports 104 will initially show "Pending" as commands are issued to the affected access ports 104. Subsequently the VLAN provisioning status changes to "Committed".

The presented sequence of interaction provides for easy and efficient VLAN provisioning in the service provider network 100.

Just as new data transport trunk links 208 can by provisioned in parallel with VLAN provisioning, so can access port provisioning (472). Therefore by operating the Refresh/ Show All Access Ports button 542 without a context (no active customer VLAN), all provisioned access ports 104 are displayed in the access port list 540. Newly provisioned access ports 104 bear a "New" VLAN provisioning status.

By selecting (472) at least one access port 104 from the access port list 540 and operating an "Activate Selected Access Port(s)" button 550, the VLAN list 510 displays VLANs associated with the active access port selection. For a newly provisioned access port 104 the VLAN list 510 will be empty.

By operating the Refresh/ Show All VLANs button 518, the VLAN list 510 displays all customer VLANs and by operating the Add/ Remove Selected VLAN(s) buttons 534 is sufficient to initiate VLAN provisioning of the customer VLAN(s) on the selected access ports 104 implementing functionality of the VLAN provisioning step 474. VLAN provisioning on the selected access ports 104 is completed by pressing a "Commit Selected VLAN(s) to Active Access Port(s)" button 552 which implements functionality of VLAN provisioning step 434. The corresponding VLAN provisioning status of the selected VLANs will initially show "Pending" as commands are issued to the affected access ports 104. Subsequently the VLAN provisioning status changes to "Committed". The presented sequence of interaction provides for easy and efficient VLAN provisioning in the service provider network 100.

As new access ports 104 may be provisioned, existing access ports 104 may also be decommissioned. A "Delete Selected Access Port(s)" button 556 may be provided. In decommissioning a selected access port 104, all VLAN associations with the selected access port 104 are removed only. The corresponding VLAN provisioning status may show that the selected access ports 104 are being decommissioned by specifying that no VLAN associations exit therewith. As access ports 104 may be decommissioned via other network management and service provisioning processes, it is understood that the sequence of operation just described may be performed automatically without necessitating operator/ analyst attention.

Additional interactive elements may be provided for extracting to an electronic form and/ or perhaps obtaining hard copies of the VLAN 510, Trunk 520, ad Access Port 540 lists enabling VLAN inventory reporting functionality.

Attention is drawn to the Customer/ VLAN name specifier associated with each VLAN list entry (510). VLAN names are used in identifying customer VLANs. Typically this specifier is populated with a Customer Identifier as shown but the invention is not limited thereto. The VLAN name specifier may not have a particular format, a requirement exists for the VLAN name to be unique. Therefore using the Customer ID alone for a VLAN customer owning a group of VLANs is not sufficient to provide data traffic differentiation.

In interacting with the "Commit ..." buttons 528, 536, 546, 552, etc., the VLAN provisioning further includes propagating the VLAN name / CustomerID specifier to the various provisioning database records held by field installed VLAN equipment. This includes the association of the VLAN name / Customer ID specification with the trunk ports 202, access ports 104, trunk link 208 definitions, etc. The propagation of the VLAN name / Customer ID into the network 100, on performing VLAN provisioning, enhances maintainability of the provisioned VLAN services. The consistency in the propagation of VLAN name / Customer ID specifiers into the network 100 helps ensure data traffic differentiation between provisioned customer VLANs.

A further "Refresh Global VLAN Status" button 560 may be provided. Operating the Refresh Global VLAN Status button 560, displays all provisioned customer VLANs in the VLAN list 510 with the current VLAN status. In the event in which a particular VLAN identifier / VLAN name combination is associated with two different customers or any other VLAN provisioning discrepancies have occurred, the VLAN status displayed is "Error" otherwise the VLAN status is "Provisioned" . This provides (visual) feedback in ensuring that VLAN provisioning has been successfully completed across the data transport network 100. An aggregation of all access port 104 operational statuses may also be included in the VLAN status.

Dependent on the particular implementation, a wide variety of VLAN provisioning status states my be defined, probed for and detected. For example, it is possible for the "Pending" VLAN provisioning status to persist for some time or a provisioning error to occur. These instances may be the result of race conditions which have led to VLAN configuration conflicts and/ or the result of a temporary unavailability of a subset of the VLAN equipment on which the VLAN provisioning is to have to effected. Subsequent activation of the "Commit..." buttons 528, 536, 546, 552, etc. may alleviate such and other anomalous instances. Nevertheless, the feedback provided via the VLAN provisioning status reporting functionality provided greatly reduce VLAN provisioning overheads by enabling an analyst to quickly identify, interpret, and address VLAN provisioning failures.

Further details regarding VLAN provisioning steps 426 and 428 are described, without limiting the invention thereto, in: co-pending commonly assigned United States Patent Applications serial number 10/ 021,080, filed on December 19^{th}, 2001, entitled "NETWORK MANAGEMENT SYSTEM ARCHITECTURE"; co-pending commonly assigned United States Patent Applications serial number 10/ 021,629, filed on December 19^{th}, 2001, entitled "METHOD OF INVOKING POLYMORPHIC OPERATIONS IN A STATICALLY TYPED LANGUAGE'; and co-pending commonly assigned United States Patent Applications serial number 10/ 115,900, filed on April 5^{th}, 2002, entitled "COMMAND LINE INTERFACE PROCESSOR" all of which are incorporated herein by reference. In summary, implementing the VLAN identifier associations pertaining provisioned VLANs includes issuing commands to network elements associated with the VLAN trunk ports 202 corresponding to the VLAN trunks 208 and VLAN access ports 104. In using Command Line Interface (CLI) commands, all aspects of VLAN provisioning may be addressed. The embodiments presented are exemplary only and persons skilled in the art would appreciate that variations to the above described embodiments may be made without departing from the spirit of the invention. The scope of the invention is solely defined by the appended claims.

## Claims

1. Method of provisioning a Virtual Local Area Network (VLAN) comprising the step of:
a. obtaining at least one VLAN IDentifier;
b. selecting a plurality of VLAN trunks; and
c. associating the VLAN ID with each one of the plurality of VLAN trunks
the selection and association of the VLAN ID with each one of the plurality of VLAN trunks being undertaken irrespective of a one of an in-use and a stand-by designation of each one of the plurality of VLAN trunks.

2. Method of provisioning a VLAN as claimed in claim 1, the method further comprising a step of: tracking previously obtained VLAN IDs.

3. Method of provisioning a VLAN as claimed in claim 1 or claim 2, the method further comprising a step of: generating the at least one VLAN ID.

4. Method of provisioning a VLAN as claimed in claim 3, wherein generating the at least one VLAN ID, the method further comprises a step of: generating a unique VLAN ID.

5. Method of provisioning a VLAN as claimed in any one of claims 1 to 4, wherein selecting the plurality of VLAN trunks, the method further comprises a step of: selecting all managed VLAN trunks.

6. Method of provisioning a VLAN as claimed in claim 5, wherein selecting all managed VLAN trunks, the method further comprises a step of: selecting all managed VLAN trunks in an associated realm of management.

7. Method of provisioning a VLAN as claimed in claim 5 or claim 6, wherein selecting all managed VLAN trunks, the method further comprises a step of: de-selecting at least one VLAN trunk.

8. Method of provisioning a VLAN as claimed in any one of claims 1 to 7, wherein associating the VLAN ID with the plurality of VLAN trunks, the method further comprises steps of:
a. determining a plurality of VLAN trunk ports corresponding to the plurality of VLAN trunks; and
b. associating the VLAN ID with each one of the plurality of VLAN trunk ports
the association of the VLAN ID with each on of the plurality of VLAN trunk ports being undertaken irrespective of a one of an in-use and a stand-by designation of each one of the plurality of VLAN trunks and each one of the plurality of VLAN trunk ports.

9. Method of provisioning a VLAN as claimed in claim 8, wherein determining the plurality of VLAN trunk ports, the method further comprises a step of: selecting all managed VLAN trunk ports.

10. Method of provisioning a VLAN as claimed in claim 9, wherein selecting all VLAN trunk ports, the method further comprises a step of: selecting all managed VLAN trunk ports in the associated realm of management.

11. Method of provisioning a VLAN as claimed in claim 9 or claim 10, wherein selecting all VLAN trunk ports, the method further comprises a step of: de-selecting at least one selected VLAN trunk port.

12. Method of provisioning a VLAN as claimed in any one of claims 8 to 11, wherein associating the VLAN ID with each one of the plurality of VLAN trunk ports, the method further comprises a step of: issuing commands to the plurality of VLAN trunk ports to enable support for VLAN ID associated communications.

13. Method of provisioning a VLAN as claimed in any one of claims 1 to 12, further comprising steps of:
a. selecting at least two VLAN access ports; and
b. associating the VLAN ID with the selected VLAN access ports.

14. Method of provisioning a VLAN as claimed in claim 13, wherein associating the VLAN ID with the selected VLAN access ports, the method further comprises a step of: issuing commands to the selected VLAN access ports to enable support for VLAN ID associated communications.

15. Method of provisioning a VLAN as claimed in any one of claims 1 to 14, further comprising a step of issuing commands to determine a VLAN provisioning status associated with at least one of a VLAN, a VLAN trunk, a VLAN trunk port, and a VLAN access port.

16. Method of provisioning a VLAN trunk comprising steps of:
a. obtaining a plurality of VLAN IDs associated with a corresponding plurality of provisioned VLANs; and
b. associating the plurality of VLAN IDs with the VLAN trunk the association of the plurality of VLAN IDs with the VLAN trunk being undertaken irrespective of a one of an in-use and a stand-by designation of the VLAN trunk.

17. Method of provisioning a VLAN trunk as claimed in claim 16, wherein obtaining the plurality of VLAN IDs, the method further comprises a step of: obtaining VLAN IDs associated with all provisioned VLANs.

18. Method of provisioning a VLAN trunk as claimed in claim 16 or claim 17, wherein obtaining VLAN IDs associated with all provisioned VLANs, the method further comprises a step of: obtaining VLAN IDs associated with all provisioned VLANs in a realm of management.

19. Method of provisioning a VLAN trunk as claimed in any one of claims 16 to 18, wherein subsequent to obtaining the plurality of VLAN IDs, the method further comprises a step of: disregarding at least one VLAN ID.

20. Method of provisioning a VLAN trunk as claimed in any one of claims 16 to 19, wherein associating the plurality of VLAN IDs with the VLAN trunk, the method further comprises steps of:
a. determining at least one VLAN trunk port corresponding to the VLAN trunk; and
b. associating the VLAN ID with the at least one VLAN trunk port
the association of the VLAN ID with the at least one VLAN trunk port being undertaken irrespective of a one of an in-use and a stand-by designation of the VLAN trunk and the at least one VLAN trunk port.

21. Method of provisioning a VLAN trunk as claimed in claim 20, wherein associating the VLAN ID with the at least one VLAN trunk port, the method further comprises a step of: issuing at least one command to the at least one VLAN trunk port to enable support for VLAN ID associated communications.

22. Method of provisioning a VLAN trunk as claimed in any one of claims 16 to 21, further comprising a step of issuing commands to determine a VLAN provisioning status associated with at least one of a VLAN, a VLAN trunk, and a VLAN trunk port.

23. Method of provisioning a VLAN trunk port comprising steps of:
a. obtaining a plurality of VLAN IDs associated with a corresponding plurality of provisioned VLANs; and
b. associating the plurality of VLAN IDs with the VLAN trunk port the association of the plurality of VLAN IDs with the VLAN trunk port being undertaken irrespective of a one of an in-use and a stand-by designation of the VLAN trunk port.

24. Method of provisioning a VLAN trunk port as claimed in claim 23, wherein obtaining the plurality of VLAN IDs, the method further comprises a step of: obtaining VLAN IDs associated with all provisioned VLANs.

25. Method of provisioning a VLAN trunk port as claimed in claim 23 or claim 24, wherein obtaining VLAN IDs associated with all provisioned VLANs, the method further comprises a step of: obtaining VLAN IDs associated with all provisioned VLANs in a realm of management.

26. Method of provisioning a VLAN trunk port as claimed in any one of claims 23 to 25, wherein subsequent to obtaining the plurality of VLAN IDs, the method further comprises a step of: disregarding at least one VLAN ID.

27. Method of provisioning a VLAN trunk port as claimed in any one of claims 23 to 26, wherein associating the VLAN ID with the VLAN trunk port, the method further comprises a step of: issuing at least one command to the VLAN trunk port to enable support for VLAN ID associated communications.

28. Method of provisioning a VLAN trunk port as claimed in any one of claims 23 to 26, further comprising a step of issuing commands to determine a VLAN provisioning status associated with at least one of a VLAN, and a VLAN trunk port.

29. VLAN provisioning human-machine interface comprising:
a. a VLAN ID selector for selecting a plurality of VLAN IDs;
b. a VLAN trunk selector for selecting a plurality of VLAN trunks; and
c. an activator for committing associations between the plurality of VLAN IDs and the plurality of VLAN trunks
the associations between the plurality of VLAN IDs and the plurality of VLAN trunks being undertaken irrespective of a one of an in-use and a stand-by designation of each one of the plurality of VLAN trunks.

30. A VLAN provisioning human-machine interface as claimed in claim 29, wherein the VLAN ID selector is further operable to select the plurality of VLAN IDs corresponding to all VLANs provisioned in a managed communications network.

31. VLAN provisioning human-machine interface as claimed in claim 29 or claim 30, wherein the VLAN ID selector is further operable to de-select at least one VLAN ID from the plurality of selected VLAN IDs.

32. VLAN provisioning human-machine interface as claimed in any one of claims 29 to 31, wherein the VLAN trunk selector is further operable to select all VLAN trunks provisioned in a managed communications network.

33. VLAN provisioning human-machine interface as claimed in any one of claims 29 to 32, wherein the VLAN trunk selector is further operable to de-select at least one VLAN trunk from the plurality of selected VLAN trunks.

34. VLAN provisioning human-machine interface as claimed in any one of claims 29 to 33, wherein the activator is further operable to initiate the issuing of at least one command to effect the associations between the plurality of VLAN IDs and the plurality of VLAN trunks.

35. VLAN provisioning human-machine interface as claimed in any one of claims 29 to 34, wherein the VLAN trunk selector further comprises a VLAN trunk port selector operable to select at least one VLAN trunk port.

36. VLAN provisioning human-machine interface as claimed in claim 35, wherein VLAN trunk port selector operable to select all VLAN trunk ports in a managed communications network.

37. VLAN provisioning human-machine interface as claimed in claim 36, wherein VLAN trunk port selector is further operable to de-select at least one VLAN trunk port.

38. VLAN provisioning human-machine interface as claimed in any one of claims 36 to 37, wherein the activator is further operable to initiate the issuing of at least one command to effect the associations between the plurality of VLAN IDs and the plurality of VLAN trunk ports.

39. VLAN provisioning human-machine interface as claimed in any one of claims 29 to 38, further comprising a VLAN access port selector for selecting at least two VLAN access ports.

40. VLAN provisioning human-machine interface as claimed in claim 39; the activator further being operable to effect associations between the plurality of VLAN IDs and the at least two VLAN access ports.

41. VLAN provisioning human-machine interface as claimed in claim 40, wherein the activator is further operable to issue at least one command to effect the associations between the plurality of VLAN IDs and the at least two VLAN access ports.

42. VLAN provisioning human-machine interface as claimed in any one of claims 29 to 41, further being operable to display a VLAN provisioning status for at least one of a VLAN, a VLAN trunk, a VLAN trunk port, and a VLAN access port.

43. Network management system using the human-machine interface claimed in any one of claims 29 to 42 to effect VLAN provisioning in a managed communications network.
